# EUROPÄISCHE PATENTSCHRIFT

(11) **EP 1 231 089 B1**
(45) Veröffentlichungstag und Bekanntmachung des Hinweises auf die Patenterteilung: **14.03.2007**
(21) Anmeldenummer: 02000497.4
(22) Anmeldetag: 09.01.2002
(51) Int. Cl.: B60H 1/00

(54) **Verfahren zur Steuerung der Standlüftung bei einem Kraftfahrzeug**
Method for controlling the stationary ventilation of a vehicle
Procédé de régulation de la ventilation à l'arrêt d'un véhicule

(30) Priorität: 10.02.2001 DE 10106152
(43) Veröffentlichungstag der Anmeldung: 14.08.2002
(73) Patentinhaber: Bayerische Motoren Werke Aktiengesellschaft, 80809 München (DE)
(72) Erfinder: Bunzl, Alexander, 80689 München (DE); Heil, Michael, 85570 Markt Schwaben (DE)

(56) Entgegenhaltungen:
- DE-A1- 19 802 057
- US-A- 5 518 176

## Beschreibung

Die Erfindung betrifft ein Verfahren zur Steuerung der Standlüftung bei einem Kraftfahrzeug gemäß dem Oberbegriff des Anspruchs 1.

Standlüftungen von Fahrzeugen, die statisch programmierbar sind, so dass sie eine vorgegebene Zeit vor dem Fahrtbeginn aktiviert werden können, sind bekannt. Die vorgegebene Zeit beträgt dabei üblicherweise 30 Minuten. Die Programmierung der Standlüftung erfolgt in der Regel mit zwei Timern im Bordcomputer, die durch den Fahrer über ein Bildschirmmenü eingestellt werden. Der erste Timer legt den Startzeitpunkt fest, der zweite Timer bestimmt den Endzeitpunkt der Aktivierung der Standlüftung, der idealerweise mit dem Fahrtbeginn zusammenfällt.

Es ist außerdem bekannt, die Standlüftung über eine Funkfernbedienung zu aktivieren. So wird in DE 199 60 562 ein Innenraumgebläse bei einem Kraftfahrzeug mit einem von der Ferne entriegelbaren Fahrertürschloss beschrieben. Das Kraftfahrzeug mit einem Innenraumluftgebläse und einem von der Ferne entriegelbaren Türschloss enthält wenigstens einen Temperatursensor zum Erfassen der Innenraumtemperatur und eine Steuereinrichtung zum Steuern des Entriegelns des Türschlosses und des Betriebs des Gebläses. Die Steuereinrichtung schaltet das Gebläse bei Entriegeln des Türschlosses ein, wenn die von dem Temperatursensor erfasste Größe eine in einem vorbestimmten Bereich liegende Temperatur anzeigt. Neben der Aktivierung der Standlüftung können über die Funkfernbedienung Fenster des Fahrzeugs abgesenkt oder das Schiebedach geöffnet werden.

Nachteile dieses Standes der Technik sind u.a. die starren Nutzungsmöglichkeiten, d.h. es kann von dem Fahrzeugführer übersehen werden, die Standlüftung zu aktivieren, oder die Standlüftung agiert aufgrund wechselnder Wetterverhältnisse nicht bedarfsgerecht. Ferner ist die 30minütige Laufzeit der Standlüftung kritisch für die Ladebilanz des Fahrzeugs. Wenn außerdem der Fahrer vor oder nach Ablauf der Standlüftungsfunktion das Fahrzeug nicht unmittelbar startet und somit eine Phase ohne Lüftung vor dem Fahrtantritt eintritt, kommt es zu einem erneuten, raschen Anstieg der Innentemperatur in dem Fahrzeug, und die Wirkung der Standlüftung geht verloren.

DE 198 02 057 A offenbart ein Verfahren zur zyklischen Standlüftung nach dem Oberbegriff des Anspruchs 1.

Es ist Aufgabe der vorliegenden Erfindung, ein Verfahren zur Steuerung der Standlüftungsfunktion anzugeben, mit der die Effizienz, Aktivierungsdauer und Flexibilität der Standlüftung verbessert werden und die Belastung der Ladebilanz des Fahrzeugs verringert wird.

Diese Aufgabe wird erfindungsgemäß durch das Verfahren nach Anspruch 1 gelöst. Bevorzugte Ausführungsformen der Erfindung sind Gegenstand der Unteransprüche.

Durch die Erfindung werden die bisherigen Funktionen der Standlüftung ergänzt. Die Betriebszeiten der Standlüftung werden nicht mehr starr abgefahren, sondern können zyklisch eingestellt werden, d.h. die Standlüftung wird alle x Minuten für y Minuten aktiviert. Wie in Simulationsberechnungen und Versuchen gezeigt werden konnte, kann bei einer solchen zyklischen Funktion der Standlüftung das Temperaturniveau im Innenraum über längere Zeiträume niedriger gehalten werden als bei einer kontinuierlichen Aktivierung der Standlüftung.

Vorzugsweise erfolgt Die Regelung der Standlüftungsfunktion erfolgt automatisch und damit bedarfsgerecht. Dazu wird die thermische Belastung des Fahrzeuginnenraums fortlaufend ermittelt, indem zyklisch die Innentemperatur gemessen wird (wobei ggf. die Außentemperatur als zusätzlicher Parameter herangezogen wird). Übersteigt die Innentemperatur einen vorgegebenen Grenzwert, wird die Standlüftung für eine vorgegebene Dauer aktiviert. Dieser Vorgang wird nach einem vorgegebenen Zeitintervall wiederholt, solange die Messwerte über den jeweiligen Schwellwerten liegen.

Um die Standlüftung flexibel und abhängig von dem (zu erwartenden) Bedarf steuern zu können, kann zusätzlich insbesondere die auf das Fahrzeug auftreffende Strahlungsleistung (der Sonne) gemessen werden. Wenn die Strahlungsleistung einen Schwellenwert überschreitet und die Innentemperatur (ggf. Außentemperatur als zusätzlicher Parameter) einen (niedrigeren) Grenzwert übersteigt, wird die Standlüftung für eine vorgegebene Dauer aktiviert. Dieser Vorgang wird nach einem vorgegebenen Zeitintervall solange wiederholt, wie die Messwerte über den Schwellwerten liegen.

In einer weiteren bevorzugten Ausführungsform der Erfindung ist die Standlüftung mit zwei unterschiedlich starken Betriebsstufen versehen. Bei dieser Ausführungsform kann die Standlüftung unmittelbar vor Fahrtantritt auf einen höheren Luftmassendurchsatz umgeschaltet werden. Bei Öffnen der Tür kann die Gebläseleistung dann reduziert werden, um die akustische Belästigung niedrig zu halten. Beim Motorstart erfolgt der Übergang von der Standlüftung zu dem regulären Klimaanlagenbetrieb, vorzugsweise automatisch bei Motorstart.

Anhand der gemessenen Temperatur wird bei Bedarf die zyklische Standlüftung aktiviert, wobei wegen der Ladebilanz vorzugsweise die maximale Aktivierungszeit zwei Tage nicht überschreitet. Generell wird die Standlüftung nur eingeschaltet, wenn sichergestellt ist, dass die Bordnetzspannung über eine längere Zeit für die Versorgung der Standlüftung ausreicht.

Ein wesentlicher Vorteil der Erfindung liegt in einem subjektiv wie objektiv angenehmeren Temperaturniveau im Fahrzeug beim Einsteigen. Ferner wird ein günstigerer Ausgangspunkt für die Fahrzeugklimatisierung nach Fahrtbeginn geschaffen, so dass nach dem Einsteigen des Fahrers und Einschalten der Klimaanlage eine schnellere Abkühlung des Innenraums auf ein behagliches Temperaturniveau sichergestellt ist. Wegen des geringeren Leistungsbedarfs der Klimaanlage wird Kraftstoff eingespart. Durch die schnellere Absenkung der Gebläseleistung des Klimageräts wird die Dauer der Geräuschbelästigung der Insassen durch die Lüftungseinrichtung verkürzt. Für die Anwendung der Erfindung werden keine Anforderungen bezüglich zusätzlicher Hardware gestellt, lediglich die Software muss angepasst werden, die bereits vorhandene On-Board-Sensorik des Fahrzeugs kann genutzt werden.

Weitere Merkmale und Vorteile der Erfindung ergeben sich aus der folgenden Beschreibung eines Ausführungsbeispiels, wobei auf die beigefügten Zeichnungen Bezug genommen wird.

Fig. 1 zeigt schematisch ein Fahrzeug mit den für die Erläuterung der Erfindung wesentlichen Komponenten.

Fig. 2A und 2B zeigen jeweils das Flussdiagramm einer Ausführungsform des erfindungsgemäßen Verfahrens.

Fig. 3 zeigt schematisch den Temperaturverlauf im Fahrzeug über die Zeit.

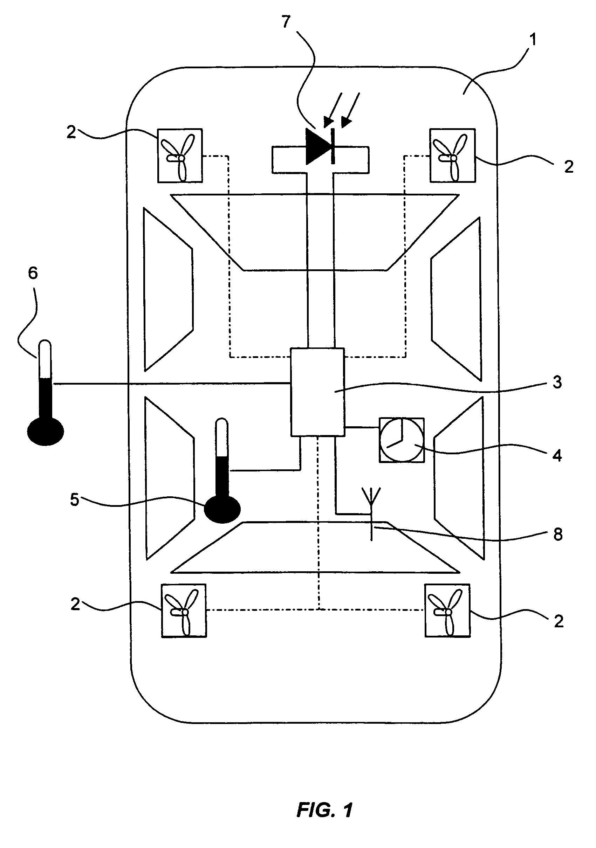

In Fig. 1 ist ein Fahrzeug 1 mit einer Standlüftung dargestellt, die mehrere Lüfter oder Ventilatoren 2 umfasst. Die Standlüftung wird durch ein zentrales Steuergerät 3 angesteuert, die einzelnen Lüfter 2 sind über Steuerleitungen mit dem Steuergerät 3 verbunden, wobei diese Steuerleitungen in Fig. 1 als strichpunktierte Linien dargestellt sind. (Im folgenden werden die Lüfter und das Steuergerät 3 mit "Standlüftung" bezeichnet.) Um die oben beschriebene Programmierung der Standlüftung in dem Fahrzeug 1 zu ermöglichen, ist das Steuergerät 3 mit mindestens einem Zeitgeber 4 verbunden, der von dem Fahrer des Fahrzeugs so eingestellt werden kann, dass die Standlüftung 2 beispielsweise eine halbe Stunde vor Fahrtbeginn die Temperatur in der Fahrgastzelle durch Luftzufuhr von außen absenkt. Das Einschalten der Standlüftung erfolgt dabei in Abhängigkeit von der in der Fahrgastzelle gemessenen Temperatur, d.h. die Standlüftung 2 wird für eine vorgegebene Dauer eingeschaltet, wenn die Innentemperatur einen vorgegebenen Grenzwert übersteigt. Die Innentemperatur wird über einen Temperaturfühler "Innen" 5 erfasst.

Beim Stand der Technik kann die Standlüftung im Fahrzeug allein schon wegen der Ladebilanz nur über einen verhältnismäßig kurzen Zeitraum im Dauerstrichbetrieb eingeschaltet werden.

Um einen größeren Zeitraum abdecken zu können und über diesen größeren Zeitraum flexibel auf die momentanen Anforderungen reagieren zu können, wird erfindungsgemäß die Standlüftung nicht konstant sondern mit einer vorgegebenen Einschaltfrequenz fₑᵢₙ jeweils für eine begrenzte Einschaltdauer tₑᵢₙ ein- und ausgeschaltet, solange die Innentemperatur über dem vorgegebenen Grenzwert liegt. Dazu wird die Innentemperatur fortwährend erfasst, die Einschaltdauer tₑᵢₙ und die Einschaltfrequenz fₑᵢₙ der Standlüftung werden in Abhängigkeit von der momentanen Innentemperatur des Fahrzeugs ermittelt. Der vorgegebene Grenzwert für die Innentemperatur kann im Bereich von 30 bis 40°C liegen.

Optional kann zusätzlich über einen Temperaturfühler "Außen" 6 die Außentemperatur erfasst werden. Bei dieser Ausführungsform der Erfindung wird aus der Innentemperatur und der Außentemperatur die Temperaturdifferenz ermittelt. Dabei kann es sein, dass die Umgebung des Fahrzeugs kühl ist, in dem Fahrzeug sich aber aus irgendeinem Grund Wärme staut. In diesem Fall ist es nicht notwendig, die Standlüftung mit hoher Leistung zu fahren, es reicht ein kurzes Einschalten der Standlüftung, und die Innentemperatur sinkt bereits bei einem kleinen durch die Standlüftung ausgetauschten Anteil der Luft in der Fahrgastzelle. Umgekehrt, wenn die Außentemperatur relativ hoch ist, muss ein größerer Anteil der Luft in der Fahrgastzelle ausgetauscht werden. Die Einschaltdauer tₑᵢₙ und die Einschaltfrequenz fₑᵢₙ der Standlüftung werden bei dieser Ausführungsform daher in Abhängigkeit von der Temperaturdifferenz zwischen der Innen- und der Außentemperatur ermittelt.

Alternativ oder zusätzlich zu der Außentemperatur kann mit einem Sonneneinstrahlungsdetektor 7 eine Strahlungsleistung gemessen werden, die von dem Fahrzeug aufgenommen wird und durch die die Fahrgastzelle aufgeheizt wird. Die Einschaltdauer tₑᵢₙ und die Einschaltfrequenz fₑᵢₙ der Standlüftung wird bei dieser Ausführungsform in Abhängigkeit von der Strahlungsleistung ermittelt: ist die Einstrahlung und die Innentemperatur hoch, so ist der Austausch eines großen Anteils der Luft in der Fahrgastzelle erforderlich; ist die Einstrahlung hoch, aber die Innentemperatur noch niedrig, so wird der Austausch von Luft durch die Standlüftung erst verzögert eingeschaltet; ist die Einstrahlung niedrig, aber die Innentemperatur hoch, so wird der Austausch der Luft in der Fahrgastzelle entsprechend zügig erfolgen. Der Schwellenwert für die Strahlungsleistung liegt vorzugsweise bei Werten über 400 W/m² Sonneneinstrahlung.

Die Temperaturfühler "Innen" und "Außen" 5 bzw. 6 sowie der Sonneneinstrahlungsdetektor 7 sind Teil der Integrierten Heiz- und Klima-Automatik (IHKA), es brauchen daher bei der Anwendung der Erfindung in einem Fahrzeug keine Sensoren zusätzlich in das Fahrzeug eingebaut zu werden.

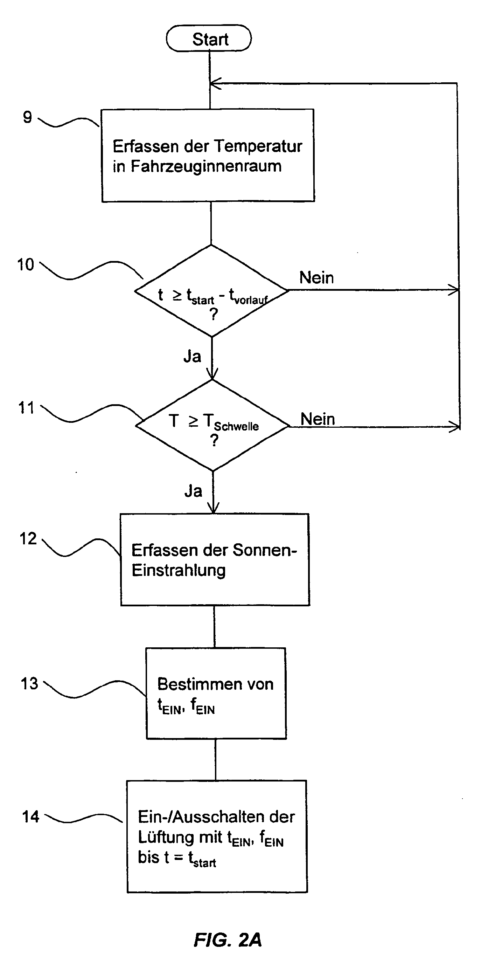

Eine Ausführungsform des bisher beschriebenen Verfahrens ist als Flussdiagramm in Fig. 2A dargestellt. Bei dieser Ausführungsform des Verfahrens wird in Schritt 9 mit dem Temperaturfühler 5 fortlaufend die Innentemperatur in der Fahrgastzelle erfasst. Ist durch Programmierung des Zeitgebers 4 die Standlüftung aktiviert worden, wird in Schritt 10 geprüft, ob der Zeitpunkt erreicht ist, ab dem die Standlüftung die Innentemperatur im Fahrzeug 1 korrigieren soll, d.h. es wird die Differenz zwischen dem vom Fahrer eingegebenen voraussichtlichen Fahrtbeginn tₛₜₐᵣₜ und einer ebenfalls vom Fahrer eingegebenen oder festgelegten Vorlaufzeit t_{vorlauf} gebildet. Dieser Wert wird mit der momentanen Zeit t verglichen. Ist der Zeitpunkt, ab dem die Standlüftung 2 die Innentemperatur gegebenenfalls korrigieren soll, noch nicht erreicht, springt das Verfahren zum Anfang, d.h. zum Erfassen der Innentemperatur in Schritt 9 zurück. Ist dagegen der Zeitpunkt, ab dem die Standlüftung 2 die Innentemperatur gegebenenfalls korrigieren soll, erreicht bzw. schon überschritten, wird im folgenden Schritt 11 die gemessene Innentemperatur T mit einem vorher einprogrammierten Schwellenwert T_{schwelle} für die Innentemperatur verglichen. Liegt die Innentemperatur T unter dem Schwellenwert T_{schwelle}, springt das Verfahren wiederum an den Anfang zu Schritt 9 (oder zu Schritt 10, nicht dargestellt). Ist dagegen der Schwellenwert T_{schwelle} überschritten, wird in Schritt 13 die Einschaltdauer tₑᵢₙ und die Einschaltfrequenz fₑᵢₙ der Standlüftung bestimmt. Wie oben bereits erläutert, ist bei hoher Innentemperatur unabhängig von weiteren Parametern ein hoher Luftstrom durch die Standlüftung erforderlich. Daher wird in diesem Fall eine höhere Einschaltdauer tₑᵢₙ und eine höhere Einschaltfrequenz fₑᵢₙ der Standlüftung gewählt. Ist dagegen die Innentemperatur noch nicht sehr hoch, werden schon aus Gründen der Ladebilanz Einschaltdauer tₑᵢₙ und Einschaltfrequenz fₑᵢₙ der Standlüftung niedriger gewählt.

Um auf die Sonneneinstrahlung unmittelbar reagieren zu können, wird in der dargestellten Ausführungsform in Fig. 2A zusätzlich die Sonneneinstrahlung durch den Detektor 7 erfasst. Die Sonneneinstrahlung fließt in die Bestimmung der Einschaltdauer tₑᵢₙ und Einschaltfrequenz fₑᵢₙ der Standlüftung ein, wie es oben in Zusammenhang mit Fig. 1 beschrieben wurde.

In Schritt 14 wird die Lüftung 2 entsprechend den in Schritt 13 festgelegten Parametern zyklisch bis zum Ablauf der eingestellten Zeit, d.h. bis zum Erreichen der einprogrammierten Abfahrtzeit t = tₛₜₐᵣₜ ein- und ausgeschaltet.

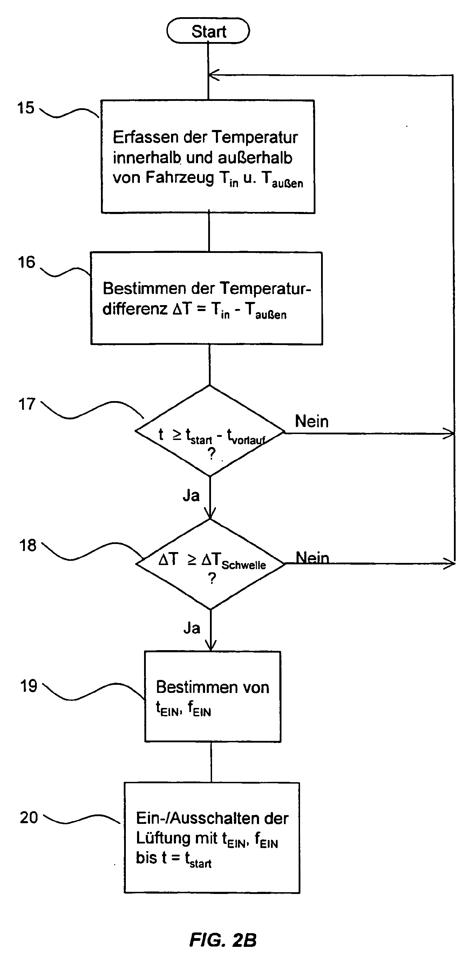

In Fig. 2B ist eine weitere Ausführungsform des erfindungsgemäßen Verfahrens als Flussdiagramm dargestellt. In Schritt 15 wird sowohl die Außen- als auch die Innentemperatur erfasst. In Abhängigkeit von der in Schritt 16 bestimmten Temperaturdifferenz ΔT wird dann analog zu den Schritten in Fig. 2A die momentane Zeit abgefragt und mit der einprogrammierten Vorlaufzeit verglichen (t ≥ tₛₜₐᵣₜ - t_{vorlauf}?, Schritt 17), die Temperaturdifferenz abgefragt (Schritt 18), die Lüftungsparameter werden festgelegt (Schritt 19), und schließlich wird entsprechend den Lüftungsparametern die Lüftung zyklisch ein- und ausgeschaltet (Schritt 20).

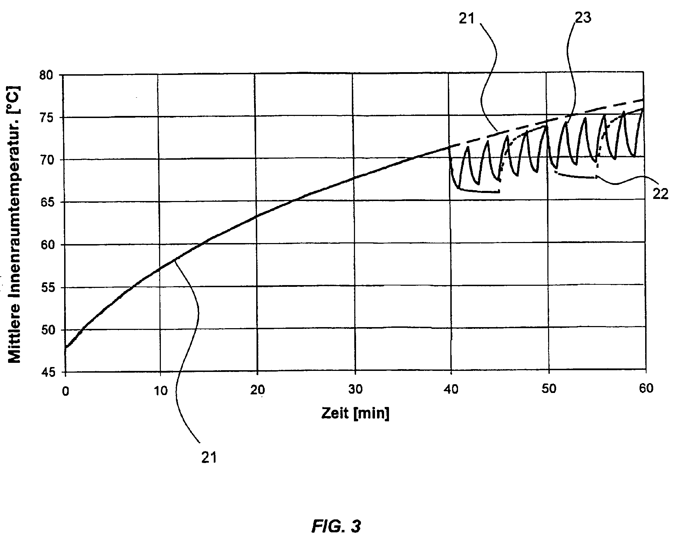

In Fig. 3 ist ein Temperaturverlauf 21 im Innenraum des Fahrzeugs über eine Stunde dargestellt. Ausgehend von einer Anfangstemperatur von etwa 50°C steigt die Innentemperatur innerhalb von 40 Minuten auf über 70°C an. Ohne weitere Maßnahmen würde sich der Anstieg der Temperatur fortsetzen, wie es durch den gestrichelten Kurvenabschnitt 21 rechts in dem Diagramm gezeigt ist. Nach 40 Minuten setzt aber bei einem Schwellenwert für die Innentemperatur von 70°C die automatische Lüftungsfunktion ein, so dass sich statt des gestrichelt gezeigten Temperaturverlaufs 21 eine Absenkung der Temperatur ergibt, die in Fig. 3 - als durchgezogene Linie - mit 23 dargestellt ist. Der genaue Verlauf und Umfang der Temperaturänderung aufgrund der Lüftungsfunktion ist abhängig von der Umwälzleistung (Volumenstrom oder Massenstrom) und der Einschaltdauer tₑᵢₙ und Einschaltfrequenz fₑᵢₙ der Lüftung. So ist in Fig. 3 der Temperaturverlauf zwischen 40 und 60 Minuten für zwei Einstellmöglichkeiten der Lüftung parallel dargestellt. Bei beiden Fällen beträgt die Umwälzleistung (Massenstrom) der Lüftung 3kg/min. Im ersten Fall, mit 23 bezeichnete durchgezogene Linie, beträgt aber die Einschaltdauer tₑᵢₙ 1 Minute, und die Einschaltfrequenz fₑᵢₙ ist etwa 0,50 min⁻¹. Im zweiten Fall, mit 22 bezeichnete gestrichelte Linie, beträgt die Einschaltdauer tₑᵢₙ 5 Minuten, und die Einschaltfrequenz fₑᵢₙ ist etwa 0,10 min⁻¹. Wie ersichtlich kommt es aufgrund der Luftumwälzung durch die Standlüftung 2 zu einer Absenkung der Innentemperatur im ersten Fall 23 von maximal ca. 5°C und im zweiten Fall 22 von maximal ca. 6 bis 7°C gegenüber dem Temperaturverlauf ohne Lüftung. Das erfindungsgemäße Verfahren stellt somit eine effektive Kühlung der Fahrgastzelle bei niedriger Belastung der Ladebilanz sicher.

Das erfindungsgemäße Verfahren kann dadurch verbessert werden, dass die Standlüftung einen ersten und einen zweiten Betriebszustand aufweist, wobei der zweite Betriebszustand einem größeren Luftstrom entspricht. Bei dieser Ausführungsform wird der zweite Betriebszustand mit dem größeren Luftstrom im Dauerbetrieb kurz, vorzugsweise bis 5 Minuten vor Fahrtbeginn zugeschaltet, während die Standlüftung dauerhaft oder ab einem vorgegebenem Zeitpunkt vor Fahrtbeginn in dem ersten Betriebszustand gefahren wird. In dem ersten Betriebszustand liegt der Luftdurchsatz beispielsweise bei einem Massenstrom von 3 kg/min, während im zweiten Betriebszustand die Standlüftung die Fahrgastzelle mit Außenluft bei dem maximal erreichbaren Massenstrom, z.B. von 7 bis 8 kg/min spült.

Um die Ladebilanz des Fahrzeugs nicht durch die Standlüftung negativ zu beeinflussen, erfolgt das Umschalten von dem ersten auf den zweiten Betriebszustand über einen (nicht dargestellten) Näherungsschalter (z.B. einen Infrarot-empfindlichen Sensor), einen Funkempfänger 8 oder mittels Chipcard (nicht dargestellt). Der Funkempfänger 8 kann mit einem in das Fahrzeug eingebauten Telefon (z.B. Mobiltelefon) gekoppelt sein oder ein separater Empfänger sein.

Generell wird die Standlüftung nur eingeschaltet, wenn die Bordnetzspannung dazu ausreicht. Mit anderen Worten, vor Einschalten der Standlüftung wird geprüft, ob die Bordnetzspannung des Fahrzeugs über einem vorgegebenen Grenzwert liegt. Ist dies der Fall, beginnt das anhand Fig. 2A und 2B beschriebene Verfahren mit Schritt 9 bzw. 15 etc.. Liegt die gemessene Bordnetzspannung dagegen unter einem vorgegebenen Schwellenwert für die Bordnetzspannung, so wird die Standlüftung nicht eingeschaltet. Insbesondere wird die Bordnetzspannung vor jedem Einschalten der Standlüftung überprüft, so dass für den Fall, dass die Bordnetzspannung während des Betriebs der Standlüftung absinken sollte, das Verfahren nach Fig. 2A oder 2B an einer geeigneten Stelle abgebrochen werden kann.

Zusätzlich zu der Steuerung der Standlüftung kann der Beginn des Verfahrens nach Fig. 2A oder 2B mit der automatischen Ansteuerung des Heckrollos und/oder der Seitenrollos zur Beschattung des Innenraums gekoppelt werden.

Am Ende des Verfahrens, d.h. wenn der Zeitpunkt tₛₜₐᵣₜ erreicht ist oder wenn der Motor bereits vorher durch den Fahrer gestartet wird, wird vorzugsweise die Standlüftung automatisch abgeschaltet, oder es wird automatisch von der Standlüftung auf den Betrieb der Klimaanlage umgeschaltet.

### Bezugszeichen

- 1: Fahrzeug
- 2: Standlüftung
- 3: Steuergerät
- 4: Zeitgeber
- 5: Temperaturfühler "Innen"
- 6: Temperaturfühler "Außen"
- 7: Sonneneinstrahlungsdetektor
- 8: Funkempfänger
- 9: Erfassen der Temperatur (innen)
- 10: Zeitabfrage
- 11: Temperaturabfrage
- 12: Erfassen der Sonneneinstrahlung
- 13: Bestimmen der Lüftungsparameter
- 14: Ein-/Ausschalten der Lüftung mit Lüftungsparametern
- 15: Erfassen der Innen - und Außentemperatur
- 16: Bestimmen der Temperaturdifferenz
- 17: Zeitabfrage
- 18: Abfrage der Temperaturdifferenz
- 19: Bestimmen der Lüftungsparameter
- 20: Ein-/Ausschalten der Lüftung mit Lüftungsparametern
- 21: Temperaturverlauf ohne Lüftung
- 22: Temperaturverlauf bei Lüftung mit kurzer Einschaltdauer und hoher-frequenz
- 23: Temperaturverlauf bei Lüftung mit längerer Einschaltdauer und niedriger-frequenz

## Patentansprüche

1. Verfahren zur Steuerung einer Standlüftung für die Absenkung einer Innentemperatur bei einem Kraftfahrzeug (1) mit einem Steuergerät (3) für die Standlüftung und wenigstens einem Zeitgeber (4), wobei die Standlüftung (2) für eine vorgegebene Dauer eingeschaltet wird, wenn die Innentemperatur einen vorgegebenen Grenzwert übersteigt, und
die Standlüftung mit einer Einschaltdauer (tₑᵢₙ) und einer Einschaltfrequenz (fₑᵢₙ) ein- und ausgeschaltet wird, solange die Innentemperatur über dem vorgegebenen Grenzwert liegt, **dadurch gekennzeichnet, dass** die Einschaltdauer (tₑᵢₙ) und die Einschaltfrequenz (fₑᵢₙ) der Standlüftung in Abhängigkeit von der Innentemperatur des Fahrzeugsvorabermittelt werden.

2. Verfahren nach Anspruch 1,
**dadurch gekennzeichnet,**
**dass** eine Außentemperatur gemessen wird und die Einschaltdauer (tₑᵢₙ) und die Einschaltfrequenz (fₑᵢₙ) der Standlüftung in Abhängigkeit von der Temperaturdifferenz zwischen der Innen- und der Außentemperatur ermittelt wird.

3. Verfahren nach Anspruch 1,
**dadurch gekennzeichnet,**
**dass** eine von dem Fahrzeug aufgenommene Strahlungsleistung gemessen wird (12) und die Einschaltdauer (tₑᵢₙ) und die Einschaltfrequenz (fₑᵢₙ) der Standlüftung in Abhängigkeit von der Strahlungsleistung ermittelt wird.

4. Verfahren nach einem der vorangehenden Ansprüche,
**dadurch gekennzeichnet,**
**dass** die Standlüftung einen ersten und einen zweiten Betriebszustand aufweist, wobei der zweite Betriebszustand einem größeren Luftmassenstrom entspricht, und
**dass** der zweite Betriebszustand durch einen Näherungsschalter des Fahrzeugs zugeschaltet wird.

5. Verfahren nach einem der Ansprüche 1 bis 3,
**dadurch gekennzeichnet,**
**dass** die Standlüftung einen ersten und einen zweiten Betriebszustand aufweist, wobei der zweite Betriebszustand einem größeren Luftmassenstrom entspricht, und
**dass** der zweite Betriebszustand über einen Funkempfänger (8) zugeschaltet wird.

6. Verfahren nach einem der vorangehenden Ansprüche,
**dadurch gekennzeichnet,**
**dass** bei Motorstart die Standlüftung ausgeschaltet und die Fahrzeugklimaanlage eingeschaltet wird.

7. Verfahren nach einem der vorangehenden Ansprüche,
**dadurch gekennzeichnet,**
**dass** die Standlüftung nur eingeschaltet wird, wenn die Bordnetzspannung des Fahrzeugs über einem vorgegebenen Grenzwert liegt.

## Claims

1. A method for controlling stationary ventilation to reduce an interior temperature in a motor vehicle (1), comprising a control apparatus (3) for the stationary ventilation and at least one timer (4), wherein the stationary ventilation (2) is switched on for a predetermined period when the interior temperature exceeds a predetermined limit value, and the stationary ventilation is switched on and off for a switch-on period (tₒₙ) and at a switch-on frequency (fₒₙ), as long as the interior temperature is above the predetermined limit value, **characterised in that** the switch-on period (tₒₙ) and the switch-on frequency (fₒₙ) of the stationary ventilation are determined in advance as a function of the interior temperature of the vehicle.

2. A method according to claim 1, **characterised in that** an exterior temperature is measured and the switch-on period (tₒₙ) and the switch-on frequency (fₒₙ) of the stationary ventilation are determined as a function of the temperature difference between the interior and the exterior temperature.

3. A method according to claim 1, **characterised in that** a radiant power received by the vehicle is measured (12) and the switch-on period (tₒₙ) and the switch-on frequency (fₒₙ) of the stationary ventilation is determined as a function of the radiant power.

4. A method according to any one of the preceding claims, **characterised in that** the stationary ventilation has a first and a second operating state, wherein the second operating state corresponds to a larger air mass flow, and **in that** the second operating state is connected by a proximity switch of the vehicle.

5. A method according to any one of claims 1 to 3, **characterised in that** the stationary ventilation has a first and a second operating state, wherein the second operating state corresponds to a larger air mass flow, and **in that** the second operating state is connected via a radio receiver (8).

6. A method according to any one of the preceding claims **characterised in that**, when the engine is started, the stationary ventilation is switched off and the vehicle air-conditioning system is switched on.

7. A method according to any one of the preceding claims, **characterised in that** the stationary ventilation is only switched on when the electrical system of the vehicle is above a predetermined limit value.

## Revendications

1. Procédé de régulation d'une ventilation à l'arrêt pour abaisser une température intérieure d'un véhicule (1) avec un dispositif de régulation pour la ventilation à l'arrêt (3) et au moins une horloge (4), la ventilation à l'arrêt (2) étant activée pendant une durée prédéfinie lorsque la température intérieure dépasse une valeur limite prédéfinie, et la ventilation à l'arrêt étant activée et désactivée avec une durée d'activation (tact) et une fréquence d'activation (f_{act}) aussi longtemps que la température est supérieure à la valeur limite prédéfinie,
**caractérisé en ce que**
la durée d'activation (tact) et la fréquence d'activation (f_{act}) de la ventilation à l'arrêt sont déterminées à l'avance en fonction de la température intérieure du véhicule.

2. Procédé selon la revendication 1,
**caractérisé en ce qu'**
on mesure une température extérieure, et la durée d'activation (tact) et la fréquence d'activation (f_{act}) de la ventilation à l'arrêt sont déterminées en fonction de la différence entre les températures intérieure et extérieure.

3. Procédé selon la revendication 1,
**caractérisé en ce qu'**
on mesure (12) une puissance de rayonnement reçue par le véhicule, et la durée d'activation (t_{act}) et la fréquence d'activation (f_{act}) de la ventilation à l'arrêt sont déterminées en fonction de la puissance de rayonnement.

4. Procédé selon une des revendications précédentes,
**caractérisé en ce que**
la ventilation à l'arrêt présente un premier et un deuxième mode de fonctionnement, le deuxième mode de fonctionnement correspondant à un plus grand débit massique d'air, et
le deuxième mode de fonctionnement est arrêté par un commutateur capacitif du véhicule.

5. Procédé selon une des revendications 1 à 3,
**caractérisé en ce que**
la ventilation à l'arrêt présente un premier et un deuxième mode de fonctionnement, le deuxième mode de fonctionnement correspondant à un plus grand débit massique d'air, et
le deuxième mode de fonctionnement est arrêté par un radiorécepteur (8).

6. Procédé selon une des revendications précédentes,
**caractérisé en ce que**
lors du démarrage du moteur, on arrête la ventilation à l'arrêt et on active et la climatisation du véhicule

7. Procédé selon une des revendications précédentes,
**caractérisé en ce que**
la ventilation à l'arrêt n'est activée que si la tension du réseau de bord du véhicule est supérieure à une valeur limite prédéfinie.
